# EUROPEAN PATENT SPECIFICATION

(11) **EP 2 450 980 B1**
(45) Date of publication and mention of the grant of the patent: **27.07.2016**
(21) Application number: 11187693.4
(22) Date of filing: 03.11.2011
(51) Int. Cl.: H01M 2/10, H01M 6/42

(54) **Battery module**
Batteriemodul
Module de batterie

(30) Priority: 04.11.2010 KR 20100109179; 04.11.2010 KR 20100109180; 04.11.2010 KR 20100109181; 04.11.2010 KR 20100109182; 11.03.2011 US 452046 P; 04.03.2011 US 449414 P; 23.09.2011 US 201113243355; 23.09.2011 US 201113241522
(43) Date of publication of application: 09.05.2012
(73) Proprietor: Samsung SDI Co., Ltd., Gyeonggi-do (KR); Robert Bosch GmbH, 70442 Stuttgart (DE)
(72) Inventor: Kim, Myung-Chul, Yongin-si (KR); Lee, Hyun-Ye, Yongin-si (KR); Jin, Hee-Joon, Yongin-si (KR); Yang, Seung-Woo, Yongin-si (KR); Sohn, Kwon, Yongin-si (KR)
(74) Representative: Gulde & Partner

(56) References cited:
- WO-A1-2007/011144
- WO-A1-2008/027343
- US-A1- 2010 047 682

## Description

Aspects of embodiments of the present invention relate to a battery module.

### Description of the Related Art

In general, secondary batteries can be reused by charging and discharging, unlike primary batteries that cannot be charged. The secondary batteries are used as energy sources for mobile devices, electric vehicles, hybrid vehicles, electric bicycles, and uninterruptible power supplies, and may be used in a single battery type or a battery module type composed of a plurality of batteries connected in one unit, in accordance with the type of available external devices.

Although small mobile devices, such as mobile phones, can operate for a predetermined time with output and capacity of a single battery, electric modules are preferable due to output and capacity in order to operate electric vehicles and hybrid vehicles, which consume a large amount of electricity, with high power for a long time. The battery modules are used by connecting a required amount of batteries in parallel or series in accordance with output and capacity.

A battery module is disclosed in WO 2007/011144 A1 that is arranged in a foldable battery cartridge.

US 2010/0047682 A1 and WO 2008/027343 A1 show battery modules having a plurality of cylindrical battery cells that are disposed between two one-piece members in order to fix the cells in relation to each other.

### SUMMARY

According to an aspect of embodiments of the present invention, a battery module increases usefulness of an installation space, such as in a vehicle, due to a decreased height.

A battery module according to the present invention includes a battery array with unit battery cells, and fixing members.

Further the battery module includes a battery array including: a plurality of battery cells, each including a first surface at a first end of the battery cell; an electrode terminal at the first end; a second surface at a second end of the battery cell opposite the first end; and a side surface extending between the first and second ends, and the second surfaces of first and second battery cells of the plurality of battery cells face each other. Each of the battery cells has a generally hexahedral shape, the side surface is a first side surface, and each of the battery cells further includes a second side surface opposite the first side surface and extending between the first and second ends, and the battery module further includes first and second fixing members adjacent opposite outer second side surfaces of the stacked battery cells. At least one of the first and second fixing members includes a plurality of bars. At least one of the first and second fixing members includes a plate. The battery module further includes a supporting member between the second surfaces of the first and second battery cells, and the supporting member is fixed between the first and second fixing members.

The battery cell has electrode terminals, a terminal surface with a vent exposed, and a bottom side opposite to the terminal surface. At least two or more pairs of battery cells, which are disposed horizontally with the bottom sides opposite to each other, may be stacked in the battery array. The fixing members fix the battery array.

Further, a battery module according to an embodiment of the present invention may include first supporting members. The first supporting members may be disposed between the bottom sides of the pair of batteries.

Further, a battery module according to an embodiment of the present invention may include insulating members. The insulating members may be disposed between a pair of stacked battery cells when two or more pairs of battery cells are stacked.

Further, a battery module according to an embodiment of the present invention may include end plates covering the terminals surfaces of the battery array such that the electrode terminals and the vents are exposed.

Further, the fixing members may include upper and lower fixing members. The upper and lower fixing members may be disposed on and beneath the battery array and coupled to the end plates, thereby restricting upward and downward movement of the battery array. Further, supporting members may be included. The supporting members may include one or more beams, disposed between the bottom sides of the pair of batteries, and coupled to the upper and lower fixing members. Further, the upper and lower fixing members and the supporting members may be thread-fastened. In this configuration, the supporting members may have a female-thread made of metal by double injection molding. In one embodiment, the supporting member may be an H-beam.

Further, the fixing members may include side fixing members. The side fixing members may be disposed on both sides of the battery array and coupled to the end plates, thereby restricting left and right movement of the battery array.

In one embodiment, the battery module further includes end plates at opposite outer ends of the battery array adjacent the first ends of the battery cells, the end plates having terminal openings exposing the electrode terminals; and at least one fixing member connecting the end plates.

In one embodiment, at least one another first battery cell of the plurality of battery cells is stacked with the first battery cell in a stacking direction, the side surfaces of the first battery cell and the at least one another first battery cell facing each other, at least one another second battery cell of the plurality of battery cells is stacked with the second battery cell in the stacking direction, the side surfaces of the second battery cell and the at least one another second battery cell facing each other, and the second surfaces of the at least one another first battery cell and the at least one another second battery cell face each other.

A height of the battery array in the stacking direction may be less than a length of a battery cell of the plurality of battery cells in a direction extending between the first and second ends.

The battery module may further include an insulating plate between battery cells of the plurality of battery cells stacked adjacent one another.

The battery module may further include a supporting member between the second surfaces of the first and second battery cells.

The supporting member may include a thread-fastening portion, and the first and second fixing members may have fastener holes for fastening the first and second fixing members to the thread-fastening portion.

The supporting member may include an insulating material, and the thread-fastening portion may include a metal.

In one embodiment, each of the battery cells further includes a pair of third side surfaces opposite each other, extending between the first and second side surfaces, and extending between the first and second ends, and the battery module further includes third fixing members adjacent the third side surfaces of battery cells of the stacked battery cells.

Each of the third fixing members may have a plurality of heat dissipation holes spaced apart along a lengthwise direction.

In one embodiment, the battery module further includes end plates at opposite outer ends of the battery array adjacent the first ends of the battery cells, the end plates having terminal openings exposing the electrode terminals, and each of the battery cells further includes a vent at the first end, and the end plates have exhaust openings at locations corresponding to the vents.

The battery module may be configured for driving a motor of an electric vehicle or a hybrid electric vehicle.

The battery module may be electrically connected to at least one another battery module. According to an aspect of embodiments of the present invention, a battery module may be efficiently installed and have desired output and capacity in a battery installation space having limited height, such as of a vehicle. As such, battery modules according to embodiments of the present invention are particularly applicable as a motor-driving power source for propelling hybrid vehicles or electric vehicles.

### BRIEF DESCRIPTION OF THE DRAWINGS

These and/or other features and aspects of the present invention will become apparent and more readily appreciated by those of ordinary skill in the art from the following description of some exemplary embodiments, taken in conjunction with the accompanying drawings.
FIG. 1 is a perspective view showing a portion of a battery module according to a comparative example.
FIG. 2 is a perspective view of a battery cell, according to an embodiment of the present invention.
FIG. 3 is a perspective view of a pair of battery cells of a battery array, according to an embodiment of the present invention.
FIG. 4 is a perspective view of a battery array, according to an embodiment of the present invention.
FIG. 5 is a schematic side view comparing heights of a transverse type of battery module and a longitudinal type of battery module.
FIG. 6 is a perspective view of an end plate of a battery module, according to an embodiment of the present invention.
FIG. 7 is a side view showing a connection structure between an end plate and a battery cell of a battery module, according to an embodiment of the present invention.
FIGS. 8 and 9 are perspective views of upper and lower fixing members, according to embodiments of the present invention.
FIG. 10 is a front perspective view of a side fixing member, according to an embodiment of the present invention.
FIG. 11A is a perspective view of a supporting member of a battery module, according to an embodiment of the present invention.
FIG. 11B is a cross-sectional view of the supporting member of FIG. 11A, taken along the line V1-V2.
FIG. 12 is an exploded perspective view of a battery module according to an embodiment of the present invention.
FIG. 13 is a perspective view of the battery module of FIG. 12, shown in an assembled state.
FIG. 14 is a schematic top view of a plurality of battery modules connected to one another.

### DETAILED DESCRIPTION

Some exemplary embodiments of the present invention will now be described with reference to the accompanying drawings; however, embodiments of the present invention may be embodied in different forms and should not be construed as limited to the exemplary embodiments illustrated and set forth herein. Rather, these exemplary embodiments are provided by way of example for understanding of the invention and to convey the scope of the invention to those skilled in the art Terms representing directions, such as "up," "down," "left," or "right" used herein are considered to be based on the status shown in the drawings, if not specifically defined or stated, and should not be construed as limiting the invention to any particular directions or orientations. Further, the same reference numerals generally represent the same parts throughout the following description.

The term "battery array" used in the comparative examples and embodiments of the present invention is used to describe a bundle of battery cells arranged and stacked together, such as in predetermined configurations.

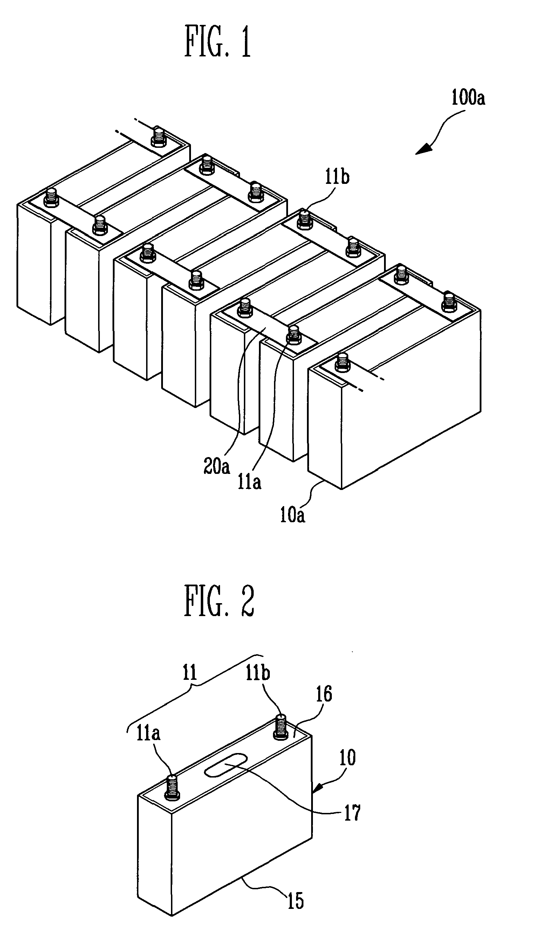

A battery module according to a comparative example is described with reference to FIG. 1. FIG. 1 is a perspective view showing a portion of a battery module according to a comparative example.

A battery module 100a of a comparative example is a longitudinal type of battery module, as shown in FIG. 1. Each battery 10a has an anode terminal 11b and a cathode terminal 11a on the top. The batteries 10a are longitudinally arranged with the electrode terminals 11a and 11b arranged in a predetermined direction. In this arrangement, the electrode terminals 11a and 11b are connected in series or in parallel, depending on a requirement. Therefore, a user may implement the longitudinal type of battery module 100a having desired output or capacity.

In general, electric vehicles are equipped with a battery module at the position of the existing gasoline or diesel fuel tank. However, the battery module may be disposed under the seats in the vehicles, such as when it is required to distribute the weight or an additional installation space is required. In this case, the height of the battery module may be a problem due to a limited height of the space.

A battery cell according to an embodiment of the present invention is described with reference to FIG. 2. FIG. 2 is a perspective view showing a battery cell 10 according to an embodiment of the present invention.

In an exemplary embodiment, the battery cells 10 are formed having generally hexahedral shapes. A terminal surface 16 is provided having both electrode terminals 11 (an anode terminal 11 b and a cathode terminal 11 a) and a vent 17.

The vent 17 may be formed at the center of the terminal surface 16. The vent 17 allows a gas produced in the battery cell 10 to be discharged. The electrode terminals 11, in one embodiment, are formed at both sides of the vent 17. Both electrode terminals 11 function as paths allowing the current produced in the battery cell 10 to flow to the outside. An electrode assembly (not shown) and a cap assembly (not shown) in the battery cell 10 are not the subject components of the internal configuration of the battery cell 10, and a detailed description thereof is not provided herein. Further, the opposite side to the terminal surface 16 is referred to as a bottom side 15 herein.

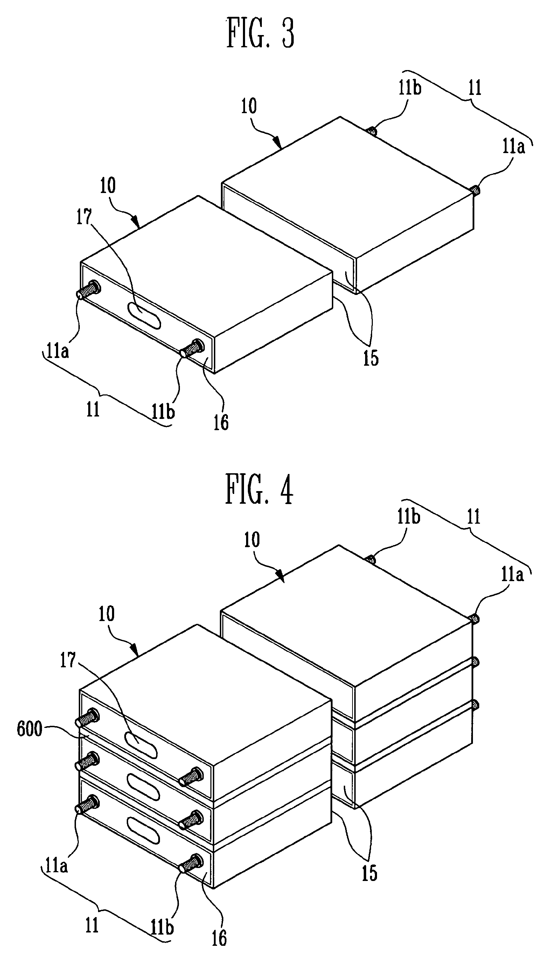

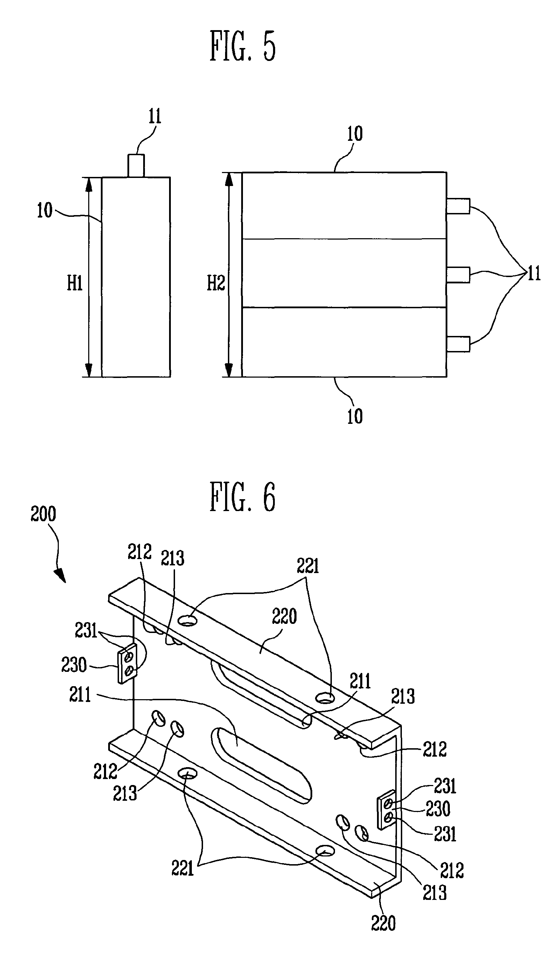

An arrangement of the battery cells 10 in a battery array according to embodiments of the present invention is described with reference to FIGS. 3 to 5. FIG. 3 is a perspective view of a pair of battery cells of a battery array, according to an embodiment of the present invention; FIG. 4 is an exploded perspective view showing a battery array of a pair of stacks of stacked batteries; and FIG. 5 is a schematic view comparing heights of a transverse type of battery module and a longitudinal type of battery module.

As shown in FIG. 3, the battery cells 10 are transversely disposed in a battery array such that the bottom sides 15 of two battery cells 10 face each other. The electrode terminals 11 are disposed to face the outside. The pair of battery cells 10 disposed as described above may be stacked in two layers or more, as shown in FIG. 4. The electrode terminals 11 of the upper and lower stacked battery cells 10 may have the same polarity or opposite polarities. This will be described in further detail below with regard to connections between battery modules according to an embodiment of the present invention.

In one embodiment, an insulating plate 600 may be disposed for electrical insulation between the battery cells 10 that are vertically stacked. The insulating plate 600 prevents or substantially prevents direct contact between the battery cells 10 and prevents or substantially prevents a short between the battery cells 10 by electrically insulating the battery cells 10.

As shown in FIG. 5, in one embodiment, a longitudinal length H1 of the battery cell 10 is two to three times greater than a transverse length H2 of the battery cell 10, or that of a component, such as an electrode assembly (not shown), in common battery cells. That is, the transverse type of battery module according to an embodiment of the present invention having battery cells stacked in two layers may be smaller in height than a longitudinal type of battery module. Further, a transverse type of battery module according to an embodiment of the present invention having battery cells stacked in three layers may be advantageous in height, considering the electrode terminals of the longitudinal type of battery module and the connecting members (not shown) or the insulating members (not shown) which connect the electrode terminals 11.

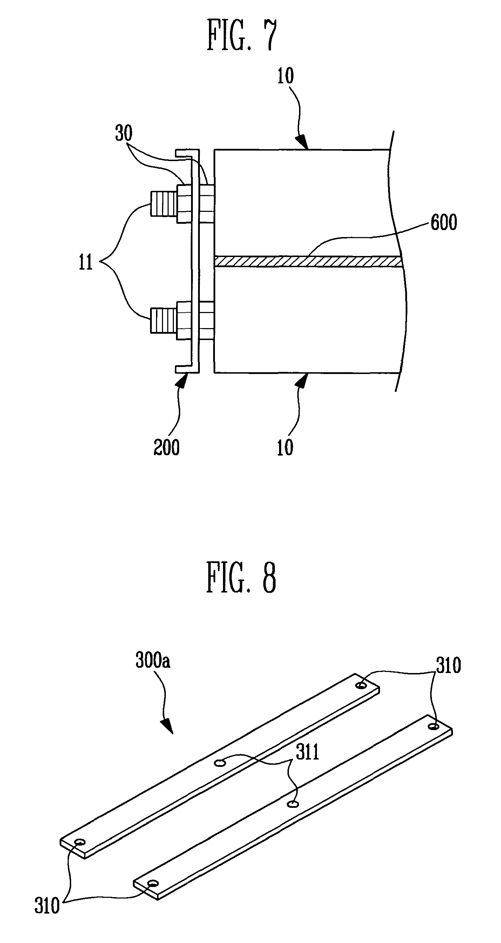

An end plate of a battery module, according to an embodiment of the present invention, is described with reference to FIGS. 6 and 7. FIG. 6 is a perspective view showing an end plate 200 according to an embodiment of the present invention; and FIG. 7 is a side view showing a connection structure between the end plate 200 and battery cells 10 according to an embodiment of the present invention.

The end plate 200, in one embodiment, is a fixing member for fixing the stacked battery cells 10 described above. The end plate 200 is attached to the terminal surfaces 16 (see FIG. 4) of the stacked battery cells 10 and fixes the battery cells 10 with other components. The end plate 200 is used for a transverse type of battery module with battery cells stacked, such as in two layers as shown in FIG. 7.

In one embodiment, a pair of first fastening holes 221 for thread-fastening is formed at the top and the bottom, respectively, of the end plate 200. In one embodiment, first extenders 220 extending at a right angle from the top and the bottom of the end plate 200 are further formed and include the first fastening holes 221. The first fastening holes 221 may be formed vertically through the first extenders 220.

In one embodiment, a pair of second fastening holes 231 for thread-fastening is formed at both sides, respectively, of the end plate 200. Second extenders 230 may extend from both sides of the end plate 200 in the same way as the first extenders 220 described above, to include the second fastening holes 231. The second fastening holes 231 may be formed transversely through the second extenders 230.

In one embodiment, exhaust holes 211 are formed through (e.g., at upper and lower regions of) the center of the end plate 200. The exhaust holes 211, in one embodiment, are formed in a shape and at a position corresponding to the vent 17 (see FIG. 3) described above.

Further, electrode holes 212 are formed at both sides of the exhaust holes 211. In one embodiment, four electrode holes 212 are formed in the battery module having battery cells in two layers. As shown in FIG. 7, the electrode terminals 11 of the battery cell 10 are exposed through the electrode holes 212. In this structure, the battery cells 10 and the end plates 200 may be fixed by forming a thread on the outer circumferential surfaces of the electrode terminals 11 and tightening nuts 30 on both sides of the end plates 200. In one embodiment, as shown in FIG. 6, detecting holes 213 may be formed in the end plate 200, such as between the electrode holes 212 and the exhaust holes 211. The detecting holes 213 allow detecting portions (not shown) of a variety of equipment to be inserted to test the voltage of the battery cells 10 in the battery module.

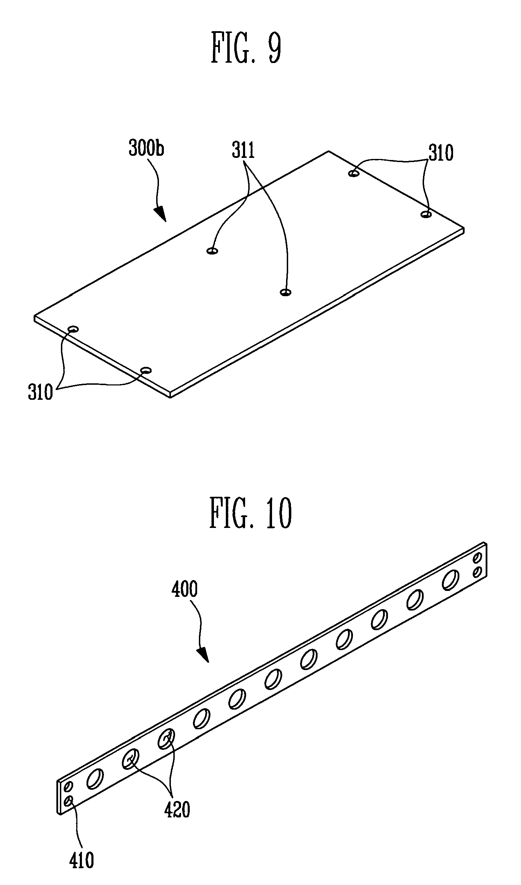

Upper and lower fixing members of a battery module, according to an embodiment of the present invention, are described below with reference to FIGS. 8 and 9. FIGS. 8 and 9 are perspective views showing upper and lower fixing members, according to embodiments of the present invention. The upper and lower fixing members, in one embodiment, are disposed on and beneath the battery array to fix the battery array.

In one embodiment, the upper and lower fixing members may be two fixing frames 300a having a length (e.g., a predetermined length), as shown in FIG. 8, or, in another embodiment, may be fixing plates 300b having a length (e.g., a predetermined length), as shown in FIG. 9. Two first through-holes 310 are formed at both ends of the fixing frames 300a or the fixing plates 300b. The first through-holes 310 correspond to the first fastening holes 221 of the end plates 200 (see FIG. 6) and may be fixed by thread-fastening. In one embodiment, second through-holes 311 are formed at a center portion of the fixing frames 300a and the fixing plates 300b. The second through-holes 311 are used to fasten another member (i.e. a supporting member), similar to the first through holes 310.

Side fixing members of a battery module, according to an embodiment of the present invention, are described with reference to FIG. 10. FIG. 10 is a front perspective view of a side fixing member 400 according to an embodiment of the present invention.

In one embodiment, the side fixing members 400 are attached to both sides of the battery array to fix the battery array. The side fixing members 400 may be frames having a predetermined length. A pair of third through-holes 410 is formed at both ends of the side fixing member 400. The third through-holes 410 correspond to the second fastening holes 231 of the end plates 200 (see FIG. 6) and may be fixed by thread-fastening.

In one embodiment, heat-dissipating holes 420 for dissipating heat and reducing the weight may be formed through the side fixing member 400.

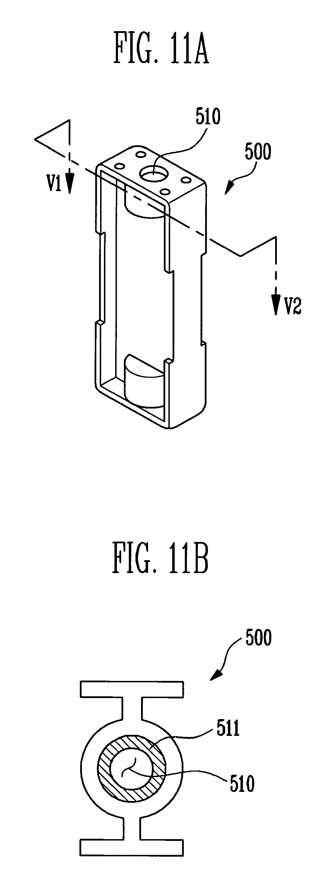

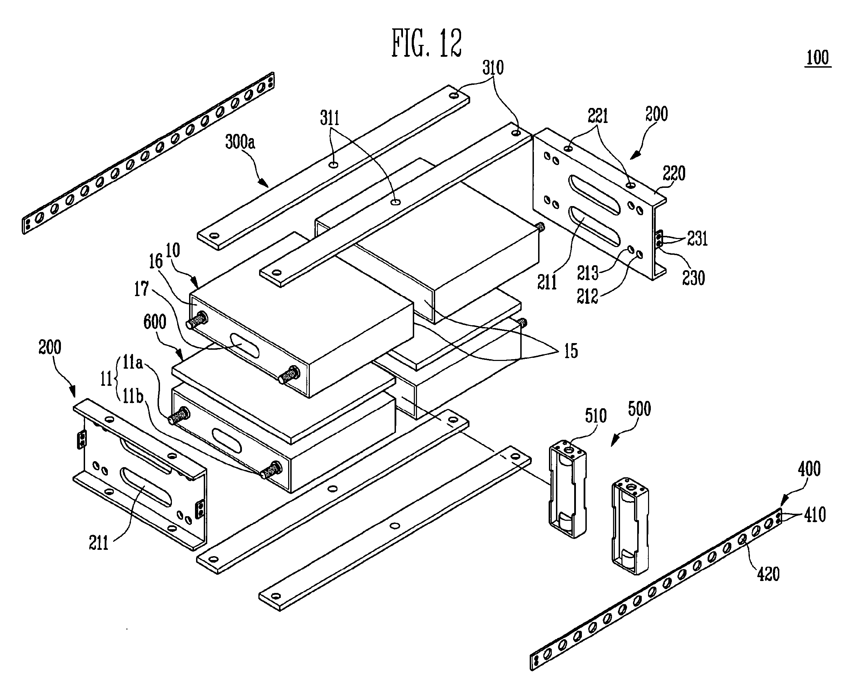

Supporting members and horizontal insulating members are described with reference to FIGS. 11 A, 11 B, and 12. FIG. 11 A is a perspective view showing a supporting member 500 according to an embodiment of the present invention; FIG. 11 B is a cross-sectional view of the supporting member 500, taken along the line V1-V2 of FIG. 11 A; and FIG. 12 is an exploded perspective view showing a battery module 100 according to an embodiment of the present invention.

In one embodiment, as shown in FIG. 12, the supporting member 500 is disposed between the bottom sides 15 in the battery array for support and insulation, and the horizontal insulating members 600 are disposed between the stacked battery cells 10 for insulation.

The supporting member 500 may be disposed to insulate the bottom sides 15 of the battery cells 10, such as in a plate shape, but may have any other suitable shape. The battery cells 10 typically expand by a small amount when being repeatedly charged and discharged. In the battery module 100, a distance between both terminal surfaces 16 disposed in one array may be large, and the supporting member 500 (e.g., a supporting member having an H-beam shape, as shown in FIGS. 11 A and 11 B) may allow the vertical fixing member 300a to sufficiently press the battery cells 10. "H-beam" as used herein refers to a beam formed in an H-shape. Thread-fastening portions 510 may be formed at the upper and lower ends of the H-beam to be connected with the fixing frames 300a or the fixing plates 300b. In one embodiment, a metal layer 511 may be further formed by double injection molding to reinforce the strength of the thread-fastening portions 510. The thread-fastening portion 510 and the second through-hole 311 described above may be coupled by a bolt or other fastener in assembling the battery module 100.

The horizontal insulating members 600 are formed in plate shapes and disposed between the battery cells 10 stacked vertically. The horizontal insulating member 600 insulates two battery cells 10 stacked vertically by preventing or substantially preventing direct contact between the two battery cells 10.

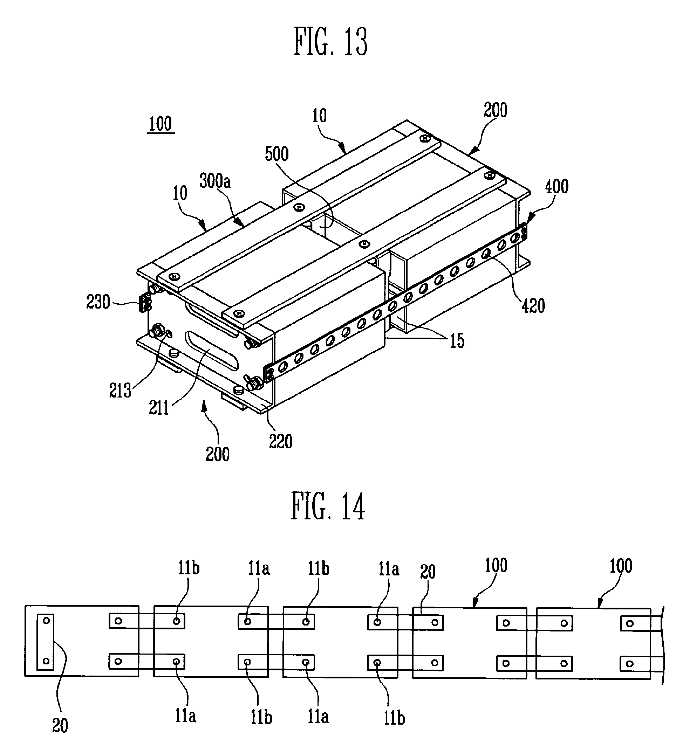

The connection relationship and operation of the components of the battery module 100 are described in further detail with reference to FIGS. 12 and 13. FIG. 12 is an exploded perspective view of the battery module 100 according to an embodiment of the present invention, and FIG. 13 is a perspective view of the battery module shown in an assembled state.

As described above, a pair of battery cells 10 is stacked with the bottom sides 15 facing each other, thereby forming the battery array. The horizontal insulating members 600 are disposed between the upper and lower stacked battery cells 10 for insulation and the supporting members 500 are disposed (e.g., vertically) between the battery cells 10 with the bottom sides 15 facing each other, such as for support and insulation.

The end plates 200 are fastened to both terminal surfaces 16 of the battery array. In one embodiment, the electrode terminals 11 of the battery cells 10 are exposed to the outside through the electrode holes of the end plates 200. Further, when the vents 17 are open, the vents 17 and the corresponding exhaust holes 211 of the end plates 200 form a continuous exhaust channel.

The upper and lower fixing members 300a, 300b, as described above, are fastened and fixed to the end plates 200 at both ends of the battery array and to the supporting members 500, at the top and the bottom of the battery array. Further, in one embodiment, the side fixing members 400 are fastened and fixed to the end plates 200, at both sides of the battery array. In one embodiment, the heat produced from the battery cells 10 may be easily discharged through the heat-dissipating holes 420.

The battery module 100 assembled as described above is shown in FIG. 13.

A connection relationship of a plurality of battery modules 100 is described with reference to FIG. 14. FIG. 14 is a schematic top view of a plurality of the battery modules 100 connected to one another with connection structures between the battery modules 100.

The electrodes of the battery modules 100 are connected by specific conductive connecting members 20. Series connection of the battery modules 100 is shown in FIG. 14. First, the battery module 100 is provided with a battery cell therein, with the anode electrode 11 b at the left side and the cathode electrode 11 a at the right side, on the top.

Further, the battery module 100 is provided with a battery cell therein, with the cathode electrode 11 a at the left side and the anode electrode 11 b at the right side, on the bottom. That is, the battery modules 100 may be arranged with the electrodes 11 opposite to each other on the top and the bottom.

Next, the electrode terminals 11 of adjacent battery modules 100 are connected by the conductive connecting members 20. When there are no more adjacent electrode terminals 11, the electrode terminals on the top and the bottom are connected, thereby forming one electric path.

As described above, according to embodiments of the present invention, a battery module may be efficiently installed and have desired output and capacity in a battery installation space having limited height, such as of a vehicle. As such, battery modules according to embodiments of the present invention are particularly applicable as a motor-driving power source for propelling hybrid vehicles or electric vehicles.

Although some exemplary embodiments of the present invention are described above, the scope of the present invention is not limited to the described embodiments

## Claims

1. A battery module comprising a battery array comprising:
a plurality of battery cells, each has a generally hexahedral shape and each comprising:
a first surface at a first end of the battery cell;
an electrode terminal at the first end;
a second surface at a second end of the battery cell opposite the first end; and
a side surface extending between the first and second ends,
wherein the second surfaces of first and second battery cells of the plurality of battery cells face each other,
wherein the side surface is a first side surface, and each of the battery cells further comprises a second side surface opposite the first side surface and extending between the first and second ends, and
wherein the battery module further comprises first and second fixing members adjacent opposite outer second side surfaces of the stacked battery cells,
wherein at least one of the first and second fixing members comprises a plurality of bars and/or a plate and
wherein the battery module further comprises a supporting member between the second surfaces of the first and second battery cells, wherein the supporting member is fixed between the first and second fixing members.

2. The battery module of claim 1, further comprising:
1. end plates at opposite outer ends of the battery array adjacent the first ends of the battery cells, the end plates having terminal openings exposing the electrode terminals; and
at least one fixing member connecting the end plates.

3. The battery module of claim 1 or 2,
wherein at least one another first battery cell of the plurality of battery cells is stacked with the first battery cell in a stacking direction, the side surfaces of the first battery cell and the at least one another first battery cell facing each other,
wherein at least one another second battery cell of the plurality of battery cells is stacked with the second battery cell in the stacking direction, the side surfaces of the second battery cell and the at least one another second battery cell facing each other, and
wherein the second surfaces of the at least one another first battery cell and the at least one another second battery cell face each other.

4. The battery module of claim 3, wherein a height of the battery array in the stacking direction is less than a length of a battery cell of the plurality of battery cells in a direction extending between the first and second ends.

5. The battery module of claim 3 or 4, further comprising an insulating plate between battery cells of the plurality of battery cells stacked adjacent one another and/or a supporting member between the second surfaces of the first and second battery cells.

6. The battery module of claim 1, wherein the supporting member comprises a thread-fastening portion, and the first and second fixing members have fastener holes for fastening the first and second fixing members to the thread-fastening portion.

7. The battery module of claim 6, wherein the supporting member comprises an insulating material, and the thread-fastening portion comprises a metal.

8. The battery module of one of claims 1 to 7,
wherein each of the battery cells further comprises a pair of third side surfaces opposite each other, extending between the first and second side surfaces, and extending between the first and second ends, and
wherein the battery module further comprises third fixing members adjacent the third side surfaces of battery cells of the stacked battery cells.

9. The battery module of claim 8, wherein each of the third fixing members has a plurality of heat dissipation holes spaced apart along a lengthwise direction.

10. The battery module of one of the preceeding claims, further comprising end plates at opposite outer ends of the battery array adjacent the first ends of the battery cells, the end plates having terminal openings exposing the electrode terminals,
wherein each of the battery cells further comprises a vent at the first end, and the end plates have exhaust openings at locations corresponding to the vents.

11. The battery module of one of the preceeding claims, wherein the battery module is configured for driving a motor of an electric vehicle or a hybrid electric vehicle.

12. The battery module of one of the preceeding claims, wherein the battery module is electrically connected to at least one another battery module.

## Patentansprüche

1. Batteriemodul, aufweisend eine Batterieanordnung, die aufweist:
eine Vielzahl von Batteriezellen, von denen jede eine allgemein sechsflächige Form aufweist und jede Folgendes aufweist:
eine erste Oberfläche an einem ersten Ende der Batteriezelle;
einen Elektrodenanschluss am ersten Ende;
eine zweite Oberfläche an einem zweiten Ende der Batteriezelle, das dem ersten Ende gegenüberliegt; und
eine Seitenfläche, die sich zwischen dem ersten und zweiten Ende erstreckt,
wobei die zweiten Oberflächen erster und zweiter Batteriezellen aus der Vielzahl der Batteriezellen einander zugewandt sind,
wobei die Seitenfläche eine erste Seitenfläche ist und jede der Batteriezellen ferner eine zweite Seitenfläche, die der ersten Seitenfläche gegenüberliegt und sich zwischen dem ersten und zweiten Ende erstreckt, aufweist, und
wobei das Batteriemodul ferner erste und zweite Befestigungselemente, die benachbart zu einander gegenüberliegenden äußeren zweiten Seitenflächen der gestapelten Batteriezellen sind, aufweist,
wobei zumindest eines des ersten und zweiten Befestigungselements eine Vielzahl von Stangen und/oder eine Platte aufweist und
wobei das Batteriemodul ferner ein Stützelement zwischen den zweiten Oberflächen der ersten und zweiten Batteriezellen aufweist, wobei das Stützelement zwischen dem ersten und zweiten Befestigungselement befestigt ist.

2. Batteriemodul nach Anspruch 1, ferner aufweisend:
Endplatten an einander gegenüberliegenden äußeren Enden der Batterieanordnung, die zu den ersten Enden der Batteriezellen benachbart sind, wobei die Endplatten Anschlussöffnungen, die die Elektrodenanschlüsse freilegen, aufweisen; und
zumindest ein Befestigungselement, das die Endplatten verbindet.

3. Batteriemodul nach Anspruch 1 oder 2,
wobei zumindest eine weitere erste Batteriezelle der Vielzahl der Batteriezellen mit der ersten Batteriezelle in einer Stapelrichtung gestapelt ist, wobei die Seitenflächen der ersten Batteriezelle und der zumindest einen weiteren ersten Batteriezelle einander zugewandt sind,
wobei zumindest eine weitere zweite Batteriezelle der Vielzahl der Batteriezellen mit der zweiten Batteriezelle in der Stapelrichtung gestapelt ist, wobei die Seitenflächen der zweiten Batteriezelle und der zumindest einen weiteren zweiten Batteriezelle einander zugewandt sind, und
wobei die zweiten Oberflächen der zumindest einen weiteren ersten Batteriezelle und der zumindest einen weiteren zweiten Batteriezelle einander zugewandt sind.

4. Batteriemodul nach Anspruch 3, wobei eine Höhe der Batterieanordnung in der Stapelrichtung kleiner als eine Länge einer Batteriezelle der Vielzahl der Batteriezellen in einer Richtung, die sich zwischen dem ersten und zweiten Ende erstreckt, ist.

5. Batteriemodul nach Anspruch 3 oder 4, ferner aufweisend eine Isolierplatte zwischen benachbart zueinander gestapelten Batteriezellen der Vielzahl der Batteriezellen, und/oder ein Stützelement zwischen den zweiten Oberflächen der ersten und zweiten Batteriezellen.

6. Batteriemodul nach Anspruch 1, wobei das Stützelement einen ein Gewinde aufweisenden Befestigungsabschnitt aufweist und das erste und zweite Befestigungselement Befestigungslöcher zum Befestigen des ersten und zweiten Befestigungselements am ein Gewinde aufweisenden Befestigungsabschnitt aufweisen.

7. Batteriemodul nach Anspruch 6, wobei das Stützelement ein Isoliermaterial aufweist und der ein Gewinde aufweisende Befestigungsabschnitt ein Metall aufweist.

8. Batteriemodul nach einem der Ansprüche 1 bis 7,
wobei jede der Batteriezellen ferner ein Paar einander gegenüberliegender dritter Seitenflächen, die sich zwischen der ersten und zweiten Seitenfläche erstrecken und sich zwischen dem ersten und zweiten Ende erstrecken, aufweist, und
wobei das Batteriemodul ferner dritte Befestigungselemente, die benachbart zu den dritten Seitenflächen der Batteriezellen der gestapelten Batteriezellen sind, aufweist.

9. Batteriemodul nach Anspruch 8, wobei jedes der dritten Befestigungselemente eine Vielzahl von Wärmeableitungslöchern, die entlang einer Längsrichtung voneinander beabstandet sind, aufweist.

10. Batteriemodul nach einem der vorhergehenden Ansprüche, ferner aufweisend Endplatten an einander gegenüberliegenden äußeren Enden der Batterieanordnung, die benachbart zu den ersten Enden der Batteriezellen sind, wobei die Endplatten Anschlussöffnungen, die die Elektrodenanschlüsse freilegen, aufweisen,
wobei jede der Batteriezellen ferner ein Entlüftungsloch am ersten Ende aufweist und die Endplatten Auslassöffnungen an Stellen, die mit den Entlüftungslöchern korrespondieren, aufweisen.

11. Batteriemodul nach einem der vorhergehenden Ansprüche, wobei das Batteriemodul konfiguriert ist, um einen Motor eines elektrischen Fahrzeugs oder eines Hybridelektrofahrzeugs anzutreiben.

12. Batteriemodul nach einem der vorhergehenden Ansprüche, wobei das Batteriemodul mit zumindest einem weiteren Batteriemodul elektrisch verbunden ist.

## Revendications

1. Module de batterie comprenant un réseau de batteries comprenant :
une pluralité d'éléments de batterie, ayant chacun une forme généralement hexaèdre et comprenant chacun :
une première surface au niveau d'une première extrémité de l'élément de batterie ;
une borne d'électrode au niveau de la première extrémité ;
une seconde surface au niveau de la seconde extrémité de l'élément de batterie opposée à la première extrémité ; et
une surface latérale s'étendant entre les première et seconde extrémités,
dans lequel les secondes surfaces des premier et second éléments de batterie de la pluralité d'éléments de batterie se font face,
dans lequel la surface latérale est une première surface latérale, et chacun des éléments de batterie comprend en outre une deuxième surface latérale opposée à la première surface latérale et s'étendant entre les première et seconde extrémités, et
le module de batterie comprenant en outre des premier et deuxième éléments de fixation adjacents aux secondes surfaces latérales externes opposées des éléments de batterie empilés,
dans lequel au moins l'un des premier et deuxième éléments de fixation comprend une pluralité de barres et/ou une plaque, et
le module de batterie comprenant en outre l'élément de support entre les secondes surfaces des premier et second éléments de batterie, l'élément de support étant fixé entre les premier et deuxième éléments de fixation.

2. Module de batterie selon la revendication 1, comprenant en outre :
des plaques d'extrémité au niveau des extrémités externes opposées du réseau de batteries adjacentes aux premières extrémités des éléments de batterie, les plaques d'extrémité ayant des ouvertures de borne exposant les bornes d'électrode ; et
au moins un élément de fixation raccordant les plaques d'extrémité.

3. Module de batterie selon la revendication 1 ou 2, dans lequel au moins un autre premier élément de batterie de la pluralité d'éléments de batterie est empilé avec le premier élément de batterie dans une direction d'empilement, les surfaces latérales du premier élément de batterie et de l'au moins un autre premier élément de batterie se faisant face,
dans lequel au moins un autre second élément de batterie de la pluralité d'éléments de batterie est empilé avec le second élément de batterie dans la direction d'empilement, les surfaces latérales du second élément de batterie et de l'au moins un autre second élément de batterie se faisant face, et
dans lequel les secondes surfaces de l'au moins un autre premier élément de batterie et de l'au moins un autre second élément de batterie se font face.

4. Module de batterie selon la revendication 3, dans lequel une hauteur du réseau de batteries dans la direction d'empilement est inférieure à une longueur d'un élément de batterie de la pluralité d'éléments de batterie dans une direction s'étendant entre les première et seconde extrémités.

5. Module de batterie selon la revendication 3 ou 4, comprenant en outre une plaque isolante entre les éléments de batterie de la pluralité d'éléments de batterie empilés de manière adjacente les uns aux autres et/ou un élément de support avec les secondes surfaces des premier et second éléments de batterie.

6. Module de batterie selon la revendication 1, dans lequel l'élément de support comprend une partie de fixation par filetage, et les premier et deuxième éléments de fixation ont des trous de fixation pour fixer les premier et deuxième éléments de fixation à la partie de fixation par filetage.

7. Module de batterie selon la revendication 6, dans lequel l'élément de support comprend un matériau isolant, et la partie de fixation par filetage comprend un métal.

8. Module de batterie selon l'une des revendications 1 à 7 :
dans lequel chacun des éléments de batterie comprend en outre une paire de troisièmes surfaces latérales opposées entre elles, s'étendant entre les première et deuxième surfaces latérales et s'étendant entre les première et seconde extrémités, et
le module de batterie comprenant en outre des troisièmes éléments de fixation adjacents aux troisièmes surfaces latérales d'éléments de batterie des éléments de batterie empilés.

9. Module de batterie selon la revendication 8, dans lequel chacun des troisièmes éléments de fixation a une pluralité de trous de dissipation de chaleur espacés le long du sens de la longueur.

10. Module de batterie selon l'une des revendications précédentes, comprenant en outre des plaques d'extrémité au niveau des extrémités externes opposées du réseau de batteries adjacentes aux premières extrémités des éléments de batterie, les plaques d'extrémité ayant des ouvertures de borne exposant les bornes d'électrode,
dans lequel chacun des éléments de batterie comprend en outre un évent au niveau de la première extrémité, et les plaques d'extrémité ont des ouvertures d'échappement aux emplacements correspondant aux évents.

11. Module de batterie selon l'une des revendications précédentes, le module de batterie étant configuré pour entraîner un moteur d'un véhicule électrique ou d'un véhicule électrique hybride.

12. Module de batterie selon l'une des revendications précédentes, le module de batterie étant électriquement raccordé à au moins un autre module de batterie.
